(19) Europäisches Patentamt
European Patent Office
Office européen des brevets

(11) Veröffentlichungsnummer: **0 036 648**
**B1**

(12) # EUROPÄISCHE PATENTSCHRIFT

(45) Veröffentlichungstag der Patentschrift: **27.06.84**

(51) Int. Cl.³: **C 03 C 27/00**, C 03 C 27/10, B 32 B 17/10, C 09 J 3/16, C 08 G 77/04, C 08 L 83/04

(21) Anmeldenummer: **81102121.1**

(22) Anmeldetag: **20.03.81**

(54) **Verfahren zum Verbinden von Substraten durch Heissiegeln.**

(30) Priorität: **26.03.80 DE 3011761**

(43) Veröffentlichungstag der Anmeldung: **30.09.81 Patentblatt 81/39**

(45) Bekanntmachung des Hinweises auf die Patenterteilung: **27.06.84 Patentblatt 84/26**

(84) Benannte Vertragsstaaten: **BE CH FR GB IT LI NL**

(56) Entgegenhaltungen:
**DE - A - 2 758 415**

**PATENTS ABSTRACTS OF JAPAN, unexamined applications, Sektion C, Band 3, Nr. 142 (C-65), 24. November 1979**
**THE PATENT OFFICE JAPANESE GOVERNMENT, Seite 52 C 65**

(73) Patentinhaber: **Fraunhofer-Gesellschaft zur Förderung der angewandten Forschung e.V., Leonrodstrasse 54, D-8000 München 19 (DE)**

(72) Erfinder: **Schmidt, Helmut, Dr., Tilman-Riemenschneider-strasse 15, D-8706 Höchberg (DE)**
Erfinder: **Tünker, Gerhard, Dipl.-Min., Brüsselerstrasse 11, D-8700 Würzburg (DE)**
Erfinder: **Scholze, Horst, Prof. Dr., Georg-Eydel-Strasse 2, D-8700 Würzburg (DE)**

(74) Vertreter: **Barz, Peter, Dr., Patentanwälte Schmied-Kowarzik Dannenberg, Weinhold, Gudel Schubert & Barz Siegfriedstrasse 8, D-8000 München 40 (DE)**

**EP 0 036 648 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Unter Heißsiegeln wird das Verbinden zweier Werkstoffe unter Einwirkung von Druck und Wärme verstanden, wobei mindestens eines der zu verbindenden Substrate eine thermoplastische Beschichtung (Siegelmedium) aufweist, die bei der angewandten Siegeltemperatur erweicht und durch den Siegeldruck dicht an das andere Substrat angepreßt wird. Beim Abkühlen verfestigt sich das thermoplastische Siegelmedium und ergibt eine feste Klebeverbindung zwischen beiden Substraten.

Die Heißversiegelung wird in großem Umfang in der Verpackungstechnik und insbesondere zum Verpacken von Lebensmitteln angewandt. Bekannte Beispiele sind Aluminium-Flachbeutel für Trokkensuppen sowie Joghurtbecher aus Polystyrol mit Deckeln aus einer Siegellack-beschichteten Aluminiumfolie. Als Siegelmedien werden verschiedene thermoplastische Kunstharze (Schmelzkleber) verwendet, z. B. Copolymere von Vinylchlorid, Vinylidenchlorid und Vinylacetat, Polyacrylate und -methacrylate, wie Polymethylmethacrylat, Polyurethane, thermoplastische Polyester, Ethylen-Vinylacetat-Copolymere, aliphatische und aromatische Polyamide, Polyethylen und ionomere Ethylen-Copolymere.

Die Heißversiegelung von Gläsern hat bisher nur geringe praktische Bedeutung. Dies liegt zum Teil an der schwierigen Abstimmung von Siegeltemperatur, -zeit und -druck einerseits und der Rezeptur des Siegelmediums andererseits. Hinzu treten jedoch zwei spezifische Probleme, die mit der Verwendung von Glas als Siegelpartner verbunden sind.

Zum einen führt die Tatsache, daß Glas bei den angewandten Siegeltemperaturen nicht erweicht, zu einem ungleichmäßigen Anpressen des Siegelmediums an die Glasoberfläche, die in aller Regel Unebenheiten (Toleranzen) aufweist. Ein gleichmäßiger Siegeldruck ist aber für die Dichtigkeit der Heißsiegelnaht z. B. beim Verschließen von Glasbehältern unbedingt erforderlich.

Zum anderen ist die Glasoberfläche im Normalzustand hydratisiert, d. h. mit einer dünnen Wasserhaut überzogen, die selbst durch mehrstündiges Erhitzen auf 200°C im Hochvakuum nicht vollständig entfernt werden kann. Für die Glasversiegelung bedeutet dies, daß gegen eine mit Wassermolekülen belegte Glasoberfläche gesiegelt wird.

Mit herkömmlichen Siegelmedien hergestellte Heißsiegelverbindungen auf unbehandelten Gläsern verlieren deshalb ihre Siegelnahtfestigkeit innerhalb von wenigen Stunden oder Tagen praktisch vollständig. Dies trifft insbesondere dann zu, wenn die heißgesiegelten Substrate feuchter Umgebung, z. B. wasserhaltigem Füllgut, ausgesetzt sind oder gar in Wasser ausgelagert werden. Vermutlich kommt es hierbei zu einer Unterwanderung des Siegelmediums durch Wassermoleküle, die durch die erwähnte Wasserhaut noch zusätzlich erleichtert wird.

Aus der DE-AS 2 833 334 ist es bereits bekannt, die Feuchtigkeitsbeständigkeit der Klebverbindung zwischen Glas und einer Metallfolie dadurch zu verbessern, daß man auf den Rand des Glasbehälters einen Haftvermittler mit hoher Affinität zum Glas und freien Bindungen für feste Vernetzungen mit der Klebschicht aufbringt. Als verwendbare Haftvermittler sind Silane und nicht näher spezifizierte siliciumorganische Verbindungen genannt.

Die Verwendung eines derartigen Haftvermittlers bei der Heißversiegelung von Gläsern hat jedoch den Nachteil, daß zum Auftragen des Haftvermittlers zusätzliche Verfahrensschritte und entsprechende Vorrichtungen erforderlich sind, die nicht nur erhebliche Investitionskosten bedingen, sondern auch bei der Serienfertigung eine Verlangsamung der Fertigungsgeschwindigkeit und damit eine geringere Wirtschaftlichkeit mit sich bringen. Dies spielt insbesondere bei der Heißversiegelung von Glasbehältern eine Rolle, wobei im Falle der Verpackung von Lebensmitteln außerdem eine Kontamination des Füllgutes durch den Haftvermittler zu befürchten ist.

Aufgabe der Erfindung ist es daher, ein Verfahren zum Verbinden von Glas mit Glas oder anderen Werkstoffen durch Heißsiegeln bereitzustellen, das auch ohne Verwendung eines Haftvermittlers für das Glas Heißsiegelverbindungen von hoher Feuchtigkeitsbeständigkeit ermöglicht.

Es wurde nun gefunden, daß bei Verwendung von Heißsiegelklebern auf Basis von thermoplastischen, organisch modifizierten Silicatwerkstoffen (Kieselsäureheteropolykondensaten) anstelle der bekannten Schmelzkleber feste und haltbare Heißsiegelverbindungen erhalten werden. Im Falle von Glas als einem der Siegelpartner zeichnet sich die Siegelnaht durch hohe Feuchtigkeitsbeständigkeit aus, selbst wenn kein Haftvermittler zur Vorbehandlung der Glasoberfläche eingesetzt wurde.

Als Siegelmedien verwendbare Kieselsäureheteropolykondensate entstehen bei der Hydrolyse und Polykondensation von

a) mindestens einem Organosilan der allgemeinen Formel I

$$R_mSiX_{4-m} \qquad (I)$$

in der R Alkyl, Alkenyl, Aryl, Alkylaryl oder Arylalkyl bedeutet, X Wasserstoff, Halogen, Hydroxyl, Alkoxy, Acyloxy oder $-NR'_2$ (R' = Wasserstoff und/oder Alkyl) darstellt und m den Wert 1, 2 oder 3 hat,

und mindestens einer der folgenden Komponenten (b), (c) und (d):

b) ein oder mehrere siliciumfunktionelle Silane der allgemeinen Formel II

$$SiX_4 \quad (II)$$

in der X die vorstehende Bedeutung hat, jedoch nicht alle Reste X Wasserstoff sind:

c) ein oder mehrere, im Reaktionsmedium lösliche, schwerflüchtige Oxide oder eine oder mehrere, ein derartiges schwerflüchtiges Oxid bildende Verbindungen eines Elementes der Hauptgruppen Ia bis Va oder der Nebengruppen IVb oder Vb des Periodensystems;

d) ein oder mehrere organofunktionelle Silane der allgemeinen Formel III

$$R_n(R''Y)_pSiX_{(4-n-p)} \quad (III)$$

in der R und X die vorstehende Bedeutung haben, R'' geradkettiges oder verzweigtes Alkylen, das durch Sauerstoff- oder Schwefelatome oder —NH-Gruppen unterbrochen sein kann, Phenylen, Alkylphenylen oder Alkylenphenylen darstellt, Y Halogen oder eine gegebenenfalls substituierte Amino-, gegebenenfalls substituierte Anilino-, Aldehyd-, Keto-, Carboxyl-, Hydroxyl-, Mercapto-, Cyano-, Hydroxyphenyl-, Carbonsäurealkylester-, Sulfonsäure-, Phosphorsäure-, Acryloxy-, Methacryloxy-, Glycidyloxy-, Epoxid- oder Vinylgruppe bedeutet, n den Wert 0, 1 oder 2 und p den Wert 1, 2 oder 3 haben, wobei n + p den Wert 1, 2 oder 3 hat,

in Gegenwart mindestens der zur Hydrolyse stöchiometrisch erforderlichen Wassermenge sowie gegebenenfalls in Gegenwart eines Kondensationskatalysators und/oder eines Lösungsmittels, wobei im Falle der Ausgangskomponenten (a) und (d) auch im Reaktionsmedium lösliche Oligomere dieser Silane verwendet werden können.

Diese thermoplastischen Kieselsäureheteropolykondensate enthalten üblicherweise 20 bis 95 Gewichtsprozent der Komponente (a), 0 bis 60 Gewichtsprozent der Komponente (b), 0 bis 40 Gewichtsprozent der Komponente (c) und 0 bis 20 Gewichtsprozent der Komponente (d). Der Mindestgehalt der Komponente (a) beträgt vorzugsweise 30 und der Maximalgehalt vorzugsweise 90 Gewichtsprozent. Der Gesamtgehalt der Komponenten (b), (c) und/oder (d) beträgt mindestens 5 Gewichtsprozent, vorzugsweise mindestens 10 Gewichtsprozent, und höchstens 80 Gewichtsprozent, vorzugsweise höchstens 70 Gewichtsprozent.

Der Maximalgehalt der Komponenten (b), (c) und (d) beträgt vorzugsweise 40 Gewichtsprozent, 30 Gewichtsprozent bzw. 10 Gewichtsprozent.

Die vorstehenden Mengenangaben beziehen sich auf die Zusammensetzung der Kieselsäureheteropolykondensate aus Oxidbausteinen; d. h. die Komponenten (a), (b), (c) und (d) werden in solchen Mengen eingesetzt, daß die durch Hydrolyse und Kondensation jeweils entstehende Oxideinheit den angegebenen Gewichtsanteil (Gewichtsprozent) des Endkondensats ausmacht. Die Menge an Organosilanen (a) errechnet sich z. B. auf Basis von Oxideinheiten der Formel $R_mSiO_{(4-m)/2}$, während für die siliciumfunktionellen Silane (b) Oxideinheiten der Formel $SiO_2$ und z. B. für Metallalkoholate (c) der Formel Metall-OR die Oxideinheit $(Metall)_2O$ zugrundegelegt werden.

Anstelle eines Gemisches aus einem Dialkylsilan (a) und einem Orthokieselsäureester (b) kann eine äquivalente Menge eines entsprechenden Monoalkylsilans als Komponente (a) verwendet werden.

In den vorstehenden Formeln (I), (II) und (III) können mehrmals vorhandene Reste R, R', R'', X bzw. Y bei einer Verbindung jeweils die gleiche oder unterschiedliche Bedeutung haben.

Die Alkylreste bedeuten z. B. geradkettige, verzweigte oder cyclische Reste mit 1 bis 20, vorzugsweise 1 bis 10 Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Pentyl, n-Hexyl und Cyclohexyl. Die Arylreste enthalten z. B. 6 bis 25, vorzugsweise 6 bis 14 und insbesondere 6 bis 10 Kohlenstoffatome. Spezielle Beispiele sind Phenyl und Naphthyl, wobei Phenyl bevorzugt ist.

Die Alkenylreste sind z. B. geradkettige, verzweigte oder cyclische Rest mit 2 bis 20, vorzugsweise 2 bis 10 Kohlenstoffatomen und insbesondere niedere Alkenylreste, wie Vinyl und Allyl.

Die Alkoxy-, Acyloxy-, Alkylamino-, Arylalkyl-, Alkylaryl-, Alkylen-, Alkylphenylen-, Alkylenphenylen-, Keto-, Carbonsäurealkylester-, substituierten Amino- und substituierten Anilinoreste leiten sich z. B. von den vorstehend genannten Alkyl- und Arylresten ab. Spezielle Beispiele sind Methoxy, Ethoxy, n- und i-Propoxy, m-, sek.- und tert.-Butoxy, Acetyloxy, Propionyloxy, Monoethylamino, Dimethylamino, Diethylamino, Monomethylanilino, Benzyl, Tolyl, Methylen, Ethylen, Trimethylen und Toluylen.

Unter den Halogenen sind Fluor, Chlor und Brom bevorzugt und Chlor besonders bevorzugt.

Vorzugsweise haben m den Wert 2, n den Wert 0 und p den Wert 1.

Spezielle Beispiele für Organosilane (a) sind:

$(CH_3)_2—Si—Cl_2$, $(CH_3)_2—Si—(OCH_3)_3$, $(CH_3)_2—Si—(OC_2H_5)_2$,

$(C_6H_5)_2-Si-Cl_2$, $(C_6H_5)_2-Si-(OC_2H_5)_2$, $CH_2=CH-Si-Cl_3$,
$CH_2=CH-CH_2-Si-(OC_2H_5)_3$, $CH_2=CH-CH_2-Si-(CH_3COO)_3$,
$(i\text{-}C_3H_7)_3-Si-OH$, $(CH_3)_2-Si-(OH)_2$.

Spezielle Beispiele für siliciumfunktionelle Silane (b) sind:

$SiCl_4$, $HSiCl_3$, $Si(OCH_3)_4$, $Si(OC_2H_5)_4$, $Si(CH_3COO)_4$.

Spezielle Beispiele für organofunktionelle Silane (d) sind:

$(C_2H_5O)_3-Si-(CH_2)_3-NH_2$, $(C_2H_5O)_3-Si-CH_2-NH_2$,
$(CH_3O)_3-Si-(CH_2)_3-NH-(CH_2)_2-NH_2$,
$(C_2H_5O)_3-Si-p\text{-}C_6H_4-NH_2$,
$(C_2H_5O)_3-Si-(CH_2)_3-SH$, $(CH_3O)_3-Si-(CH_2)_4-SH$,
$CH_3(CH_3O)_2-Si-CH_2-CH(CH_3)-CH_2-NH-(CH_2)_2-NH_2$,
$CH_3(C_2H_5O)_2-Si-(CH_2)_4-NH_2$,$(CH_3)_2C_2H_5O-Si-CH_2-NH_2$,
$CH_3(C_2H_5O)_2-Si-CH_2-NH_2$, $(C_3H_7O)_3-Si-(CH_2)_4-CN$

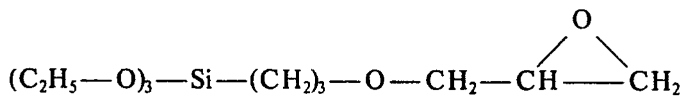

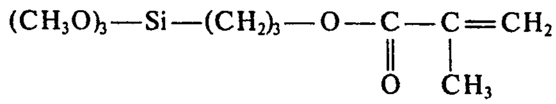

Diese Silane sind zum Teil Handelsprodukte oder sie lassen sich nach bekannten Methoden herstellen; vgl. W. Noll, »Chemie und Technologie der Silicone«, Verlag Chemie GmbH, Weinheim/Bergstraße (1968).

Anstelle der monomeren Ausgangssilane (a) und(d) können gegebenenfalls auch im Reaktionsmedium lösliche Oligomere dieser Silane eingesetzt werden; d. h. geradkettige oder cyclische, niedermolekulare Teilhydrolysate (Polyorganosiloxane) mit einem Kondensationsgrad von z. B. etwa 3 bis 6, vorzugsweise etwa 3.

Als Komponente (c) werden im Reaktionsmedium lösliche, schwerflüchtige Oxide oder derartige schwerflüchtige Oxide bildende Verbindungen von Elementen der Gruppen Ia bis Va, IVb oder Vb des Periodensystems eingesetzt. Vorzugsweise leitet sich die Komponente (c) von folgenden Elementen ab: Na, K, Mg, Ca, B, Al, Pb, P, As, Ti, Zr und/oder V, wobei Na, Ca, Mg, B, Al und P besonders bevorzugt sind.

Unter den schwerflüchtigen Oxiden sind $Na_2O$, $K_2O$, CaO, $TiO_2$, $As_2O_3$ und $P_2O_5$ bevorzugt und $B_2O_3$ besonders bevorzugt.

Im Reaktionsmedium lösliche, schwerflüchtige Oxide bildende Verbindungen sind z. B. anorganische Säuren, wie Phosphorsäure und Borsäure, sowie deren Ester, Halogenide und Salze. Ferner eignen sich Hydroxide, wie NaOH, KOH oder $Ca(OH)_2$, und Alkoxide, wie NaOR, KOR, $Ca(OR)_2$, $Al(OR)_3$ oder $Ti(OR)_4$, wobei sich R von niederen Alkoholen,wie Methanol, Ethanol, Propanol oder Butanol, ableitet. Weitere verwendbare Ausgangsverbindungen sind entsprechende Salze mit flüchtigen Säuren, z. B. Acetate, basische Acetate, Formiate, Nitrate und Halogenide, z. B. basisches Bleiacetat.

Zur Herstellung der in den erfindungsgemäßen Heißsiegelklebern verwendeten Kieselsäureheteropolykondensate werden die Ausgangskomponenten im gewünschten Mengenverhältnis unter Feuchtigkeitsausschluß, gegebenenfalls gelöst in einem organischen Lösungsmittel, miteinander vermischt. Beispiele für geeignete Lösungsmittel sind Alkohole, vorzugsweise niedere aliphatische Alkohole, wie Methanol und Ethanol, Ketone, vorzugsweise niedere Dialkylketone, wie Aceton und Methylisobutylketon, Ether, vorzugsweise niedere Dialkylether, wie Diethylether, Amide, wie Dimethylformamid und deren Gemische.

Gleichzeitig oder anschließend wird mindestens die Wassermenge zugegeben, die zur hydrolytischen Spaltung der vorhandenen hydrolysierbaren Gruppen stöchiometrisch erforderlich ist. Unter »hydrolysierbaren Gruppen« werden hierbei solche Gruppen verstanden, die unter den angewandten Reaktionsbedingungen hydrolysierbar sind, d. h. SiO-Alkyl, Si-H, Si-Halogen und ähnliche Gruppen. Bezogen auf Alkoxysubstituenten beträgt die stöchiometrische Wassermenge beispielsweise $^2/_3$ der zur formelmäßigen Hydrolyse sämtlicher Alkoxyreste erforderlichen Wassermenge, da pro zwei Alkoxyreste ein Wassermolekül abgespalten wird. Die Anwendung eines zu großen Wasserüberschusses ist unerwünscht, da sonst wasserlösliche Polykondensate mit niedrigem Polymerisationsgrad entstehen. Vorzugsweise arbeitet man mit der 1- bis höchstens 20fachen stöchiometrisch erforderlichen Wassermenge.

Die Polykondensation erfolgt gegebenenfalls unter Zusatz eines Katalysators, z. B. einer Protonen oder Hydroxylionen abspaltenden Verbindung oder eines Amins. Beispiele für geeignete Katalysatoren sind Wasser, organische oder anorganische Säuren, wie Salzsäure und Essigsäure, organische oder anorganische Basen, wie Ammoniak, Alkali- oder Erdalkalimetallhydroxide, z. B. Natrium- oder Calciumhydroxid, und wasserlösliche Amine, wie Triethylamin. Hierbei sind Wasser und wasserlösliche flüchtige Säuren und Basen, insbesondere Wasser, Salzsäure und Ammoniak, besonders bevorzugt. Die Katalysatorkonzentration beträgt z. B. bis zu etwa 5 Gewichtsprozent, bezogen auf das Reaktionsgemisch. Bei Verwendung von Säuren und Basen gilt diese Konzentration für 0, 1 N bis 10 N wäßrige Lösungen.

Die Polykondensation wird üblicherweise bei Temperaturen von —20 bis +130°C, vorzugsweise —20 bis zur Rückflußtemperatur des verwendeten Lösungsmittels und insbesondere bei Raumtemperatur durchgeführt. Die Kondensationszeit richtet sich nach den jeweiligen Ausgangskomponenten und deren Mengenanteilen, dem verwendeten Katalysator, der Reaktionstemperatur etc. Bei sauren Katalysatoren werden kürzere Kondensationszeiten angewandt. Im allgemeinen erfolgt die Polykondensation bei Normaldruck, kann jedoch auch bei erhöhtem oder verringertem Druck durchgeführt werden.

Nach beendeter Kondensation trennt man das gegebenenfalls vorhandene organische Lösungsmittel ab, wäscht das erhaltene Kondensat gründlich bis zur neutralen Reaktion mit heißem Wasser und trocknet es dann. Anschließend wird gegebenenfalls eine mehrere Minuten bis mehrere Stunden, z. B. 1 bis 24 Stunden dauernde, Wärmebehandlung bei 50 bis 250°C durchgeführt, um die Thermoplastizität des Kondensats einzustellen. Hierauf wird das Produkt in geeigneten Vorrichtungen, z. B. Brechern, Mörsern oder Mühlen, mechanisch zerkleinert oder pulverisiert.

Die erfindungsgemäßen Heißsiegelkleber können neben dem Kieselsäureheteropolykondensat gegebenenfalls übliche Additive enthalten, z. B. Füllstoffe, Farbstoffe, Pigmente, Haftvermittler und andere Verarbeitungshilfsmittel. Ferner können gegebenenfalls andere, damit verträgliche Thermoplaste, z. B. die nachstehend genannten herkömmlichen Schmelzkleber, zugemischt werden.

Bei der erfindungsgemäßen Heißversiegelung von Glas ist es im Gegensatz zu den bisher angewandten Verfahren nicht erforderlich, die Glasoberfläche einer speziellen Vorbehandlung zu unterwerfen. Vorzugsweise wird sie lediglich z. B. mit organischen Lösungsmitteln entfettet. Auch der Alterungszustand des Glases beeinflußt das Verfahrensergebnis nicht nennenswert. Selbst beim Heißsiegeln auf Gläsern, die längere Zeit an der Luft bewittert wurden, erhält man feste und feuchtigkeitsbeständige Heißsiegelverbindungen. Dies stellt einen wesentlichen Fortschritt gegenüber bekannten Siegelmedien dar, die beim Heißsiegeln auf gealterten Glasoberflächen keine brauchbaren Ergebnisse ermöglichen.

Das mit dem Glas zu verbindende Substrat kann aus Glas oder beliebigen anderen Werkstoffen bestehen, z. B. Metallen, Papier, Pappe, Kunststoff oder Verbundstoffen. Zur Versiegelung von Glasbehältern sind Metallfolien, insbesondere Aluminiumfolie bevorzugt. Um in diesem Fall aus ästhetischen Gründen sicherzustellen, daß sich das Siegelmedium beim Öffnen des verschlossenen Behälters vom Glasrand und nicht von der Metallfolie ablöst, kann diese mit einem Haftgrundmittel (Primer) vorbehandelt werden. Das zu verbindende Substrat kann beliebige Form annehmen und z. B. als Platte, Folie, ebene oder nach innen verformte Platine oder als Bördelkappe vorliegen.

Das Siegelmedium wird zum Heißversiegeln auf eines der beiden zu verbindenden Substrate aufgebracht, z. B. im Falle des Verschließens von Glasbehältern entweder auf den Glasrand oder die Metallfolie. Wenn das Siegelmedium in Pulverform vorliegt, wird die aufgetragene Pulverschicht anschließend aufgeschmolzen, z. B. durch Wärmebehandlung bei 50 bis 250°C. Eine andere Möglichkeit ist die Extruderbeschichtung, bei der das Siegelmedium direkt als Schmelze auf die Substratoberfläche aufgetragen wird.

In einer weiteren Ausführungsform kann das Siegelmedium in einem geeigneten organischen Lösungsmittel gelöst oder dispergiert werden, worauf man den erhaltenen Lack auf übliche Weise auf das Substrat aufträgt, z. B. durch Tauchlackieren, Aufstreichen oder Aufsprühen. Geeignete organische Lösungsmittel sind z. B. aliphatische, cycloaliphatische, aromatische oder aliphatisch-aromatische Kohlenwasserstoffe, wie Pentan, Cyclohexan, Benzol oder Toluol, vorzugsweise jedoch polare Lösungsmittel, z. B. Alkohole, wie Methanol oder Ethanol, Ether, wie Diethylether, Dioxan oder Tetrahydrofuran, und Ketone, wie Aceton. Die Konzentration des Siegelmediums in dem verwendeten Heißsiegellack beträgt gewöhnlich 0,1 bis 50 Gewichtsprozent, vorzugsweise 0,1 bis 10 Gewichtsprozent. Nach dem Auftragen wird der Heißsiegellack an der Luft bei Raumtemperatur oder erhöhter Temperatur bis zu etwa 200°C getrocknet.

Neben diesen Methoden können auch beliebige andere bekannte Verfahren angewandt werden, z. B. kann man das Siegelmedium in Form einer Folie zwischen die zu verbindenden Substrate einbringen und dann heißsiegeln. Wenn das erfindungsgemäße Heißsiegelmedium auf das Glas aufgebracht worden ist, kann man das andere Substrat mit einem zusätzlichen Heißsiegelmedium beschichten. Dieses zusätzliche Heißsiegelmedium kann sowohl ein erfindungsgemäßer Heißsiegelkleber als auch ein herkömmlicher Schmelzkleber sein, z. B. ein Vinylchlorid-, Vinylidenchlorid- oder Vinylacetat-Copolymerisat, ein Polyacrylat oder -methacrylat, wie Polymethylmethacrylat, ein Polyurethan, ein thermoplastischer Polyester, ein Ethylen-Vinylacetat-Copolymerisat, ein aliphatisches oder aromatisches Polyamid, Polyethylen oder ein ionomeres Ethylen-Copolymerisat.

Die Heißsiegelung erfolgt im Verfahren der Erfindung unter üblichen Bedingungen, z. B. bei einer

Siegeltemperatur von etwa 100 bis 350°C, einem Siegeldruck von etwa 2 bis 5 bar und einer Siegelzeit von etwa 0,1 bis 10 Sekunden. Es können sowohl das direkte Siegelverfahren, bei dem das Aufheizen durch ein Siegelwerkzeug über eines der zu verbindenden Substrate erfolgt, als auch das indirekte Siegelverfahren angewandt werden, bei dem man eines der Substrate z. B. mit dem Siegelwerkzeug, einem Infrarotstrahler, einer Gasflamme oder durch elektrische Widerstandsheizung auf die gewünschte Siegeltemperatur vorerwärmt. Ferner kann das Aufheizen des Siegelmediums durch Induktionsheizung erfolgen.

Als Siegelwerkzeuge verwendet man herkömmliche Siegelplatten oder Siegelköpfe. Der Siegelkopf kann gegebenenfalls so ausgebildet sein, daß das Aufheizen nur im Bereich der gewünschten Heißsiegelnaht erfolgt.

Erfindungsgemäß heißversiegelte Glasbehälter mit Aluminium-Platinen oder durchsichtigen Kunststoff-Schnappdeckeln eignen sich z. B. zum Aufbewahren von Trockengütern, wie Tee, Kaffee, Instantprodukten oder Arzneimitteln, nicht-wasserhaltigen Füllgütern, wie Honig, Erdnußbutter oder Kosmetika, und wasserhaltigen Füllgütern, wie Konfitüren, Joghurt oder Fruchtsäften.

Gegenüber bekannten Produkten haben die erfindungsgemäß heißversiegelten Glasbehälter den Vorteil, daß sie selbst ohne das aufwendige und kostspielige Aufbringen von Haftvermittlern eine feste und dauerhafte Heißsiegelnaht von ausgezeichneter Feuchtigkeitsbeständigkeit aufweisen und deshalb auf einfache und wirtschaftliche Weise hergestellt werden können. Außerdem besteht keine Gefahr einer Kontamination des Füllgutes durch Haftvermittler.

Die Beispiele erläutern die Erfindung.

### Beispiel 1

Eine Lösung aus 15 ml Methanol, 3,5 ml Tetramethoxysilan und 10 ml Dichlordiphenylsilan wird mit 200 ml Wasser in einem offenen Gefäß auf 50°C erhitzt und 15 Minuten ohne Rühren bei dieser Temperatur gehalten. Hierbei setzt sich am Gefäßboden ein Kondensat ab, das von der überstehenden Lösung durch Dekantieren getrennt und bis zur neutralen Reaktion mit Wasser gewaschen wird. Anschließend ttrocknet man das Kondensat 3 Stunden bei 150°C.

1 g des erkalteten getrockneten Kondensats wird in 2 g Dioxan gelöst. Mit dem erhaltenen Lack wird eine Aluminiumfolie mit einer Dicke von 0,040 mm auf der Mattseite lackiert (ca. 4—6 g/m$^2$). Zur Entfernung des Lösungsmittels wird die lackierte Folie etwa 10 Sekunden bei 200°C im Trockenschrank getrocknet.

Zum dichten Verschließen eines mit Wasser gefüllten Glasbehälters (Breite des Siegelrands: 3 mm) wird ein passendes Folienstück ausgestanzt und mit einem beheizten Siegelkopf 3 Sekunden bei 200°C aufgesiegelt. Die Heißsiegelnaht ist nach 4monatiger Lagerung des Behälters bei 20°C noch vollkommen wasserdicht.

### Beispiel 2

Das Verfahren von Beispiel 1 wird wiederholt, jedoch verwendet man ein Kondensat, das unter Verwendung von 3,5 ml Tetraethoxysilan, 10 ml Dichlordiphenylsilan und 15 ml Ethanol hergestellt worden ist. Hierbei werden ähnlich gute Ergebnisse erzielt.

### Beispiel 3

Das Verfahren von Beispiel 1 wird wiederholt, jedoch verwendet man ein Kondensat, das unter Verwendung von 3 ml Tetramethoxysilan, 1 ml $\gamma$-Aminopropyltriethoxysilan, 5 ml Methylvinyldichlorsilan, 5 ml Dichlordiphenylsilan und 15 ml Methanol hergestellt worden ist. Hierbei werden ähnlich gute Ergebnisse erzielt.

### Beispiel 4

Die in den Beispielen 1 bis 3 erhaltenen getrockneten Kondensate werden in 50gewichtsprozentiger Acetonlösung auf die zu versiegelnde Glasoberfläche aufgetragen. Nach 5minütiger Trocknung bei Raumtemperatur wird die beschichtete Glasoberfläche mit einem unbeschichteten Aluminiumstreifen von 50 mm Länge, 10 mm Breite und 0,06 mm Dicke 1 Sekunde bei 220°C versiegelt. Die mittlere Siegelnahtfestigkeit bei schrägem Abzug wird mit einer Zugprüfmaschine gemessen. Hierbei beträgt die mittlere Siegelnahtfestigkeit bei frisch versiegelten Folien etwa 0,3 N/cm. Nach 4wöchiger Lagerung der Proben in Wasser ist kein Nachlassen der Festigkeit meßbar.

### Beispiel 5

Nach dem Verfahren von Beispiel 1 wird ein Kondensat unter Verwendung von 3,5 ml Tetramethoxysilan, 0,5 ml Tetraethylorthotitanat, 10 ml Dichlordiphenylsilan und 15 ml Methanol hergestellt. Das getrocknete Kondensat wird in einer 10gewichtsprozentigen Acetonlösung auf heißendvergütete

Glasscheibchen von 20 x 50 mm Größe lackiert und einige Minuten bei Raumtemperatur getrocknet. Anschließend siegelt man einen 1 cm breiten, mit Hochdruck-Polyethylen beschichteten Aluminiumfolienstreifen 3 Sekunden bei 200° C auf die Glasoberfläche.

Zur Prüfung der Wasserbeständigkeit der Heißsiegelnaht werden die Proben in destilliertem Wasser von Raumtemperatur gelagert. Nach 4wöchiger Lagerung ist kein Nachlassen der Siegelnahtfestigkeit meßbar.

Beispiel 6

Das Verfahren von Beispiel 5 wird wiederholt, jedoch verwendet man ausgelaugte, nicht heißendvergütete Glasscheibchen. Auch hier ist nach 4wöchiger Lagerung in Wasser kein Nachlassen der Siegelnahtfestigkeit meßbar.

Beispiel 7

Das Verfahren von Beispiel 5 wird wiederholt, jedoch verwendet man ein Kondensat, das unter Verwendung von 5 ml Tetraethylorthotitanat, 10 ml Dichlordiphenylsilan und 15 ml Methanol hergestellt worden ist. Nach 4wöchiger Lagerung in 5gewichtsprozentiger Essigsäure ist kein Nachlassen der Siegelnahtfestigkeit meßbar.

**Patentansprüche**

1. Verfahren zum Verbinden von Glas mit Glas oder anderen Werkstoffen durch Heißsiegeln unter Verwendung eines thermoplastischen Kunststoffes als Siegelmedium, dadurch gekennzeichnet, daß man als Siegelmedium ein Kieselsäureheteropolykondensat verwendet, das hergestellt worden ist durch Hydrolyse und Polykondensation von

a) mindestens einem Organosilan der allgemeinen Formel I

$$R_mSiX_{4-m} \qquad (I)$$

in der R Alkyl, Alkenyl, Aryl, Alkylaryl oder Arylalkyl bedeutet, X Wasserstoff, Halogen, Hydroxyl, Alkoxy, Acyloxy oder $-NR'_2$ (R' = Wasserstoff und/oder Alkyl) darstellt und m den Wert 1, 2 oder 3 hat,
und mindestens einer der folgenden Komponenten (b), (c) und (d):

b) ein oder mehrere siliciumfunktionelle Silane der allgemeinen Formel II

$$SiX_4 \qquad (II)$$

in der X die vorstehende Bedeutung hat, jedoch nicht alle Reste X Wasserstoff sind;

c) ein oder mehrere, im Reaktionsmedium, lösliche, schwerflüchtige Oxide oder eine oder mehrere, ein derartiges schwerflüchtiges Oxid bildende Verbindungen eines Elementes der Hauptgruppen Ia bis Va oder der Nebengruppen IVb oder Vb des Periodensystems;

d) ein oder mehrere organofunktionelle Silane der allgemeinen Formel III

$$R_n(R''Y)_pSiX_{(4-n-p)} \qquad (III)$$

in der R und X die vorstehende Bedeutung haben, R'' geradkettiges oder verzweigtes Alkylen, das durch Sauerstoff- oder Schwefelatome oder —NH-Gruppen unterbrochen sein kann, Phenylen, Alkylphenylen oder Alkylenphenylen darstellt, Y Halogen oder eine gegebenenfalls substituierte Amino-, gegebenenfalls substituierte Anilino-, Aldehyd-, Keto-, Carboxyl-, Hydroxyl-, Mercapto-, Cyano-, Hydroxyphenyl-, Carbonsäurealkylester-, Sulfonsäure-, Phosphorsäure-, Acryloxy-, Methacryloxy-, Glycidyloxy-, Epoxid- oder Vinylgruppe bedeutet, n den Wert 0, 1 oder 2 und p den Wert 1, 2 oder 3 haben, wobei n + p den Wert 1, 2 oder 3 hat;

in Gegenwart mindestens der zur Hydrolyse stöchiometrisch erforderlichen Wassermenge sowie gegebenenfalls in Gegenwart eines Kondensationskatalysators und/oder eines Lösungsmittels, wobei im Falle der Ausgangskomponenten (a) und (d) auch im Reaktionsmedium lösliche Oligomere dieser Silane verwendet werden können.

2. Verfahren nach Anspruch 1, dadurch gekennzeichnet, daß das Kieselsäureheteropolykondensat, bezogen auf Oxideinheiten, 20 bis 95 Gewichtsprozent der Komponente (a) , 0 bis 60 Gewichtsprozent

der Komponente (b), 0 bis 40 Gewichtsprozent der Komponente (c) und 0 bis 20 Gewichtsprozent der Komponente (d) enthält, wobei der Gesamtgehalt der Komponenten (b), (c) und (d) mindestens 5 Gewichtsprozent beträgt.

3. Verfahren nach Anspruch 2, dadurch gekennzeichnet, daß das Kieselsäureheteropolykondensat, bezogen auf Oxideinheiten, 30 bis 90 Gewichtsprozent der Komponente (a), 0 bis 40 Gewichtsprozent der Komponente (b), 0 bis 30 Gewichtsprozent der Komponente (c) und 0 bis 10 Gewichtsprozent der Komponente (d) enthält, wobei der Gesamtgehalt der Komponenten (b), (c) und (d) mindestens 10 Gewichtsprozent beträgt.

4. Verfahren nach einem der Ansprüche 1 bis 3, dadurch gekennzeichnet, daß man ein Siegelmedium verwendet, das außer dem Kieselsäureheteropolykondensat einen anderen, damit verträglichen Thermoplasten enthält.

5. Verfahren nach einem der Ansprüche 1 bis 4, dadurch gekennzeichnet, daß man das Siegelmedium auf Glas aufbringt und das beschichtete Glas mit dem anderen Substrat heißsiegelt.

6. Verfahren nach Anspruch 5, dadurch gekennzeichnet, daß das andere Substrat mit einem zusätzlichen Siegelmedium beschichtet worden ist.

7. Verfahren nach einem der Ansprüche 1 bis 4, dadurch gekennzeichnet, daß man das Siegelmedium auf das andere Substrat aufbringt und das beschichtete Substrat mit Glas heißsiegelt.

8. Verfahren nach einem der Ansprüche 1 bis 4, dadurch gekennzeichnet, daß man das Siegelmedium in Form einer Folie zwischen die zu verbindenden Substrate einbringt und anschließend heißsiegelt.

9. Verfahren nach einem der Ansprüche 5 bis 8, dadurch gekennzeichnet, daß man als anderes Substrat eine Metallfolie, vorzugsweise aus Aluminium verwendet.

10. Verfahren nach Anspruch 9, dadurch gekennzeichnet, daß man die Metallfolie mit einem Haftgrundmittel vorbehandelt.

**Claims**

1. A method of bonding glass to glass or other materials by means of heat-sealing, using a thermoplastic synthetic material as a sealing medium, characterized in that as sealing medium a silicic acid heteropolycondensate is used, which has been prepared by hydrolysis and polycondensation of

a) at least one organosilane of the general formula I

$$R_mSiX_{4-m} \qquad (I)$$

wherein R is alkyl, alkenyl, aryl, alkylaryl or arylalkyl, X is hydrogen, halogen, hydroxyl, alkoxy, acyloxy or $-NR'_2$ (R' = hydrogen and/or alkyl) and m has a value of 1, 2 or 3,
and at least one of the following components (b), (c) and (d):

b) one or more silicon-functional silanes of the general formula II

$$SiX_4 \qquad (II)$$

wherein X is as defined above, with the proviso that not all of substituents X are hydrogen;

c) one or more involatile oxides soluble in the reaction medium or one or more compounds capable of forming such an involatile oxide, of an element selected from main groups Ia to Va or secondary groups IVb or Vb of the Periodic Table.

d) one or more organofunctional silanes of the general formula III

$$R_n(R''Y)_pSiX_{(4-n-p)} \qquad (III)$$

wherein R and X are as defined above, R'' is straight-chain or branched alkylene, optionally interrupted by oxygen or sulfur atoms or —NH-groups or is phenylene, alkylphenylene or alkylenephenylene, Y is halogen or an optionally substituted amino, optionally substituted anilino, aldehyde, keto, carboxyl, hydroxyl, mercapto, cyano, hydroxyphenyl, carboxylic, acid alkyl ester, sulfonic acid, phosphoric acid, acryloxy, methacryloxy, glycidyloxy, epoxy or vinyl group, n has a value of 0, 1 or 2, and p has a value of 1, 2 or 3, the sum of n + p having a value of 1, 2 or 3;

in the presence of at least the amount of water stoichiometrically required for hydrolysis and, optionally, in the presence of a condensation catalyst and/or a solvent, whereby, in the case of starting components (a) and (d), also oligomers of these silanes, which are soluble in the reaction mixture, may be used.

2. A method according to claim 1, wherein, based on oxide units, the silicic acid heteropolycondensate comprises from 20 to 95% by weight of component (a), from 0 to 60% by weight of component (b), from 0 to 40% by weight of component (c), and from 0 to 20% by weight of component (d), the total concentration of components (b), (c) and (d) being at least 5% by weight.

3. A method according to claim 2 wherein, based on oxide units, the silicic acid heteropolycondensate comprises from 30 to 90% by weight of component (a), from 0 to 40% by weight of component (b), from 0 to 30% by weight of component (c), and from 0 to 10% by weight of component (d), the total concentration of components (b), (c) and (d) being at least 10% by weight.

4. A method according to any of claims 1 to 3 wherein, in addition to the silicic acid heteropolycondensate, the sealing medium comprises a thermoplastic material compatible therewith.

5. A method according to any of claims 1 to 4 wherein the sealing medium is applied to glass and the coated glass is heat-sealed to a second substrate.

6. A method according to claim 5 wherein said second substrate has been coated with an additional sealing medium.

7. A method according to any of claims 1 to 4 wherein the sealing medium is applied to said second substrate and the substrate thus coated is heat-sealed to glass.

8. A method according to any of claims 1 to 4 wherein the sealing medium in film form is placed between the substrates and subsequently heat-sealed.

9. A method according to any of claims 5 to 8 wherein said second substrate is a metal foil, preferably consisting of aluminium.

10. A method according to claim 9 wherein said metal foil has been pretreated with a primer.

**Revendications**

1. Procédé pour la liaison par scellage à chaud du verre avec du verre ou avec d'autres par emploi d'une matière synthétique thermoplastique en tant que milieu de scellage, caractérisé en ce qu'on utilise comme milieu de scellage un hétéropolycondensat d'acide silicique qui a été préparé par hydrolyse et polycondensation

a) d'au moins un organosilane de formule générale I

$$R_mSiX_{4-m} \quad (I)$$

dans laquelle R représente un alcoyle, un alcényle, un aryle, un alcoylaryle ou un arylalcoyle, X de l'hydrogène, un halogène, un hydroxyle, un alcoxy, un acyloxy ou $-NR'_2$ (R' = hydrogène et/ou alcoyle) et m possède la valeur 1, 2 ou 3, et d'au moins un des constituants b), c) et d) suivants:

b) un ou plusieurs silanes à fonctionnalité silicium répondant à la formule II

$$SiX_4 \quad (II)$$

dans laquelle X possède la signification ci-dessus, tous les restes C n'étant cependant pas de l'hydrogène;

c) un ou plusieurs oxydes faiblement volatils, solubles dans le milieu réactionnel ou un ou plusieurs composés générateurs d'un tel oxyde faiblement volatil d'un élément des groupes principaux Ia à Va ou des sous-groupes IVb ou Vb de la classification périodique des éléments;

d) un ou plusieurs silanes organofonctionnels de formule générale III

$$R_n(R''Y)_pSiX_{(4-n-p)} \quad (III)$$

dans laquelle R et X possèdent la signification ci-dessus, R'' représente un alcoylène linéaire ou ramifié pouvant être interrompu par des atomes d'oxygène ou de soufre ou par des groupes —NH, un phénylène, un alcoylphénylène ou un alcoylènephénylène, Y représente un halogène ou un groupe amino éventuellement substitué, un groupe anilino éventuellement substitué, les groupes aldéhyde, céto, carboxyle, hydroxyle, mercapto, cyano, hydroxyphényle, ester alcoylique d'acide carboxylique, acide sulfonique, acide phosphorique, acryloxy, méthacryloxy, glycidyloxy, époxy ou vinyle, n possède la valeur 0, 1 ou 2 et p la valeur 1, 2 ou 3, p + n ayant la valeur 1, 2 ou 3, en présence au moins de la quantité d'eau stoechiométriquement nécessaire à l'hydrolyse ainsi qu'éventuellement en présence d'un catalyseur de condensation et/ou d'un solvant, moyennant quoi des oligomères, de ces silanes solubles dans le milieu réactionnel peuvent également être utilisés dans le cas des constituants de départ a) et d).

2. Procédé selon la revendication 1, caractérisé en ce que l'héteropolycendensat d'acide silicique renferme, part rapport aux motifs d'oxyde, 20 à 95% en poids du constituant (a), 0 à 60% en poids du constituant (b), 0 à 40% en poids du constituant (c) et 0 à 20% en poids du constituant (d), la teneur totale en constituants (b), (c) et (d) s'élevant à au moins 5% en poids.

3. Procédé selon la revendication 2, caractérisé en ce que l'hétéropolycondensat d'acide silicique renferme, par rapport aux motifs d'oxyde, 30 à 90% en poids du constituant (a), 0 à 40% en poids du constituant (b), 0 à 30% en poids du constituant (c) et 0 à 10% en poids du constituant (d), la teneur totale en les constituants (b), (c) et (d) s'élevant à au moins 10% en poids.

4. Procédé selon l'une des revendications 1 à 3, caractérisé en ce qu'on utilise un milieu de scellage qui contient, outre l'hétéropolycondensat d'acide silicique, un autre thermoplaste compatible avec celui-ci.

5. Procédé selon l'une des revendications 1 à 4, caractérisé en ce qu'on applique le milieu de scellage sur du verre et que l'on scelle à chaud le verre enduit avec l'autre substrat.

6. Procédé selon la revendication 5, caractérisé en ce que l'autre substrat a été enduit d'un milieu de scellage supplémentaire.

7. Procédé selon l'une des revendications 1 à 4, caractérisé en ce qu'on applique le milieu de scellage sur l'autre substrat et que l'on scelle à chaud le substrat enduit avec du verre.

8. Procédé selon l'une des revendications 1 à 4, caractérisé en ce que l'on introduit le milieu de scellage sous forme d'une feuille entre les substrats à assembler et que l'on scelle aussitôt après à chaud.

9. Procédé selon l'une des revendications 5 à 8, caractérisé en ce qu'on utilise comme autre substrat une feuille de métal, de préférence en aluminium.

10. Procédé selon la revendication 9, caractérisé en ce qu'on traite préalablement la feuille de métal avec un primaire.